**Europäisches Patentamt**

**European Patent Office**

**Office européen des brevets**

(19)

(11) Veröffentlichungsnummer : **0 118 911 B1**

(12) **EUROPÄISCHE PATENTSCHRIFT**

(45) Veröffentlichungstag der Patentschrift :
30.11.88

(51) Int. Cl.⁴ : **G 01 N 27/46**

(21) Anmeldenummer : **84102639.6**

(22) Anmeldetag : **10.03.84**

(54) Elektrochemischer Gasanalysator für den SO2-Gehalt in Gasen, insbesondere Rauchgasen.

(30) Priorität : 12.03.83 DE 3308888
12.03.83 DE 8307201 U

(43) Veröffentlichungstag der Anmeldung :
19.09.84 Patentblatt 84/38

(45) Bekanntmachung des Hinweises auf die Patenterteilung : 30.11.88 Patentblatt 88/48

(84) Benannte Vertragsstaaten :
BE CH DE FR GB IT LI LU NL

(56) Entgegenhaltungen :
EP-A- 0 059 841
DE-C- 1 091 776
GB-A- 1 109 295

(73) Patentinhaber : **Kernforschungsanlage Jülich Gesellschaft mit beschränkter Haftung
Postfach 1913
D-5170 Jülich 1 (DE)**

(72) Erfinder : **Divisek, Jiri, Dr.
Gutenbergstrasse 34
D-5170 Jülich (DE)**
Erfinder : **Fürst, Leander
Heinsberger Strasse 10
D-5170 Jülich (DE)**

EP 0 118 911 B1

## Beschreibung

Die Erfindung bezieht sich auf einen elektrochemischen Gasanalysator für den $SO_2$-Gehalt in Gasen, insbesondere Rauchgasen, mit einer Meßzelle mit einer die Depolarisationsströme der zu bestimmenden Gase anzeigenden Meßelektrode und einer unpolarisierbaren Gegenelektrode im gleichen Elektrolyten, der durch die Meßgaseinleitung zu einer Zirkulationsströmung, die gelöstes Gas enthaltenden Elektrolyten durch den Zwischenraum zwischen Meß- und Gegenelektrode treibt, angetrieben und im Kreislauf geführt ständig erneuert wird, wobei das im Elektrolyten gelöste $SO_2$ außerhalb der Zelle durch Behandlung mit Luft in Gegenwart von Aktivkohle beseitigt wird.

Die Kontrolle des $SO_2$-Gehaltes in Abgasen ist gegenwärtig eine besonders wichtige meßtechnische Aufgabe. Alle bekannten bisher verfügbaren Meßgeräte, die auf verschiedenen Prinzipien basieren (Infrarot, Wärmeleitfähigkeit, UV usw.), sind entweder zu teuer oder in sehr beschränkten Meßbereichen anwendbar.

Von der Anmelderin wurde daher bereits ein elektrochemischer Gasanalysator der oben genannten Art entwickelt (EP-A 0 059 841), der preiswert und über einen weiten Konzentrationsbereich anwendbar ist. Bei diesem Analysator wird bereits Elektrolyt im die Meßzelle zugetropft und verbrauchter Elektrolyt fortgeführt, der gegebenenfalls nach Beseitigung des im Elektrolyten gelösten $SO_2$ durch Behandlung mit Luft in Gegenwart von Aktivkohle außerhalb der Zelle im Kreislauf in diese zurückgeführt wird. Als Elektrolyt dient verdünnte schwefelsaure Kupfersulfatlösung.

Da der Meßeffekt von der $SO_2$-Konzentration im Elektrolyten abhängt, die kumulativ mit der Kontaktzeit bis zur Erreichung des Gleichgewichtswertes zunimmt, ist die Nachweisempfindlichkeit solcher Geräte umso höher, je länger die Aufsättigungszeit des Elektrolyten gewählt wird, weshalb bei solchen Geräten üblicherweise ein Elektrolytwechsel in der Zelle von etwa 0,01 bis 0,1 pro Minute (siehe z. B. DE-AS 1 091 776) vorgesehen wird. Ein solcher Elektrolytaustausch ist so gering, daß Überlegungen zur Aufsammlung, Regenerierung und Rezyklierung üblicherweise nicht und nur dann angestellt werden, wenn beachtliche Kupfersalzkonzentrationen im Elektrolyten enthalten sind. Die dann erforderliche Beseitigung von $SO_2$ durch Aufoxidation mit Sauerstoff in Gegenwart von Aktivkohle erfolgt üblicherweise, indem man Aktivkohle im Elektrolyten suspendiert und durch diese Suspension Luft hindurchleitet.

In der Praxis zeigt sich nun leider, daß die Stabilität und Reproduzierbarkeit der Meßergebnisse und deren auch nur annähernd lineare Abhängigkeit vom $SO_2$-Gehalt über einen weiten Meßbereich hinweg sehr zu wünschen übrig läßt. Diese Problematik wird auch nicht durch eine gute Thermostatisierung, wie sie in der genannten DE-AS vorgeschlagen wird und selbst nicht durch die Konzeption einer mit $SO_2$-freiem Gas belieferten Zweitzelle als Referenzzelle in Kompensationsschaltung behoben, wie sie von der Anmelderin konzipiert wurde.

Überraschenderweise wurde nun gefunden, daß ein deutlich erhöhter Elektrolytaustausch in der Meßzelle, der zwar eine gewisse, aber doch tragbare Verminderung des auswertbaren Meßsignals mit sich bringt, zu einer erheblichen Verbesserung der Arbeitsweise solcher Zellen führt, bei denen dann die Linearität der Abhängigkeit der Meßwerte für den $SO_2$-Gehalt und die Signalstabilität verbessert und die Ansprechgeschwindigkeit erhöht sind. Dabei sollte für einen lebhaften Elektrolytaustausch in der Zelle gesorgt werden, bei dem zumindest etwa 50 % des Elektrolytvolumens in der Zelle pro Minute ausgetauscht werden. Da mit steigendem Elektrolytaustausch die Signalhöhe sinkt, sollte der Elektrolytaustausch jedoch auch nach oben begrenzt werden. Gleichzeitig macht der lebhafte Elektrolytaustausch eine Regenerierung und Rezyklierung notwendig.

Der erfindungsgemäße Gasanalysator ist demgemäß im wesentlichen gekennzeichnet durch ein Zufuhrsteuerungselement im Kreislauf am Eingang der Zelle für eine Erneuerung des Elektrolyten in der Zelle mit einem 0,5 bis 5-fachen Volumenaustausch pro Minute und eine an den Ausgang der Zelle anschließende, mit Luftzutritt versehene Aktivkohlepatrone für die $SO_2$-Beseitigung mit einer solchen Größe und Anordnung von Elektrolytzulauf und -ablauf, daß die Kohle von dem aus der Zelle abfließenden Elektrolyten zumindest teilweise nur benetzt wird.

Das Verhältnis von Gasdurchlauf zu Elektrolytdurchlauf liegt bei dieser Anordnung größenordnungsmäßig bei etwa 10 bis 40.

Die dabei als $SO_2$-Filter dienende, mit einem im Vergleich zur Meßzelle erheblich größeren Querschnitt versehene Aktivkohlepatrone ist so konzipiert, daß eine relativ große Oberfläche existiert, bei der Kohle, Elektrolyt und Sauerstoff miteinander in Kontakt kommen können.

Diese Forderung wird insbesondere durch eine am oberen Ende offene, senkrecht angeordnete Patrone mit unterem Auslauf gebildet, die etwa 50 bis 100 ml grobgekörnte Aktivkohle mit einem Korndurchmesser von zumindest etwa 1 mm enthält, an deren oberem Ende der Elektrolyt zutropft.

Vorzugsweise besteht die Meßelektrode aus Kohle und wird insbesondere durch einen Graphitstab gebildet, während die Gegenelektrode aus Kupfer besteht. Zweckmäßigerweise können beide Elektroden durch ein Diaphragma voneinander getrennt werden, das dann den Elektrolytstrom im wesentlichen begrenzt.

Aus fertigungstechnischen Gründen ist eine Zelle besonders geeignet, bei der die Elektrodenanordnung in einer Vertikalbohrung eines Blocks vorgesehen ist, bei dem das der Gaseinleitung dienende Zweigrohr durch eine am unteren Ende der Vertikalbohrung einmündende Schrägbohrung gebildet wird, wobei beide Bohrungen im oberen Bereich über eine Verbindungsleitung (insbesondere mit geringfügiger Neigung zur Vertikalbohrung hin) in Verbindung stehen, deren Verlängerung als Gas- und Elektrolytauslaß aus der Zelle dient. Man kann auch beide Bohrungen schräg vorsehen. Bei diesem Konzept ist besagte Verbindungsleitung relativ lang und wirkt in etwa als Beruhigungsstrecke. In diese Verbindungsleitung mündet der Elektrolytzulaß, der insbesondere ein darüber angeordnetes Niveaugefäß mit Auslaßkapillare (am Boden) aufweist.

Im Rückführungskreis des Elektrolyten befindet sich vorzugsweise ein größeres Vorratsgefäß für regenerierten Elektrolyten (von etwa 5 l Fassungsvermögen), dessen Niveau mittels eines niveaugeregelten Wasserzulaufs kontrolliert wird. Auf diese Weise werden Verdampfungsverluste kompensiert und die Elektrolytkonzentration im wesentlichen konstant gehalten. Dieses Vorratsgefäß befindet sich zweckmäßigerweise auf einem Niveau unterhalb der Zelle, so daß der von der Zelle abfließende Elektrolyt nach Passieren des $SO_2$-Filters und vorzugsweise eines nachgeschalteten einfachen mechanischen Filters (z. B. Papier- oder Gewebefilter oder Glasfritte) in das Vorratsgefäß abfließen kann. An dieses Gefäß schließt sich dann eine Pumpe an, die den von $SO_2$ befreiten Elektrolyten aus dem Vorrat in das Element zur Elektrolytzufuhrsteuerung (insbesondere gebildet durch ein mit Auslaufkapillare versehenes Niveaugefäß zum Ausgleich von Schwankungen der Pumpleistung) fördert.

Zweckmäßigerweise wird, wie bereits in der EP-A 0 059 841 ausgegeben, eine Zwillingszelle (jeweils mit Zweigrohr zur Gaseinleitung für den Zirkulationsstrom) vorgesehen, wobei beide Zellen insbesondere als Bohrungen innerhalb eines einzigen Blocks untergebracht sind. Die Zweitzelle dient dabei als Referenzzelle, durch die einfach Luft geleitet wird, und als Meßwert wird die Differenz der Ströme beider Zellen ermittelt. Auf diese Weise wird eine sonst notwendige Thermostatisierung vermieden, die insbesondere bei der Messung des $SO_2$-Gehaltes an Kaminen erforderlich wäre, in deren Umgebung unterschiedliche Temperaturen herrschen können.

Die im angemessenen Verhältnis zum Elektrolytumlauf zugeführten Gase, insbesondere Rauchgase, können z. B. mittels einer Sonde und einer Gasförderpumpe am Kamin entnommen und in die Meßzelle eingeleitet werden, wobei für die automatische Regelung der Gaszufuhr grundsätzlich eine Manostatanordnung vorgesehen werden kann, wie sie in der obengenannten EP-A angegeben ist. Vorzugsweise werden die heißen Gase jedoch über einen Druckregler geschickt, der im wesentlichen durch eine Durchflußkammer mit Begrenzungswand in Form einer federbelasteten Membran gebildet wird, die auf einen Arm eines zweiarmigen Hebels wirkt, dessen anderer Arm als Drosselklappe der Gaszuführung ausgebildet ist. Zweckmäßigerweise ist die Federvorspannung mittels einer Schaube regulierbar. Die Membran besteht in Anbetracht der erhöhten Temperaturen (im Bereich von 100 bis 200 °C) bei der Überwachung von Rauchgasen insbesondere aus Silikonkautschuk oder gewebeverstärktem Polytetrafluoräthylen.

Nachfolgend wird die Erfindung anhand der beigefügten Zeichnungen näher beschrieben ; es zeigen (im Schema) :

Figur 1 einen Elektrolytkreislauf für einen $SO_2$-Analysator mit Doppelzelle ;

Figur 2 einen $SO_2$-Filter (im Schnitt) ;

Figur 3 eine Einzelzelle, die mit einem Gasdurchflußregler in der Gaszufuhrleitung betrieben wird (etwa im Vertikalschnitt) ;

Figur 4 eine Doppelzellenanordnung mit Einzelzelltyp gemäß Figur 3 (weitgehend in Aufsicht) ;

Figur 5 einen Druckregler für die Gaszuleitung (im Schnitt) ;

Figur 6 die Anordnung eines Analysators am Kamin mit Gasweg ; und

Figur 7 eine Eichkurve.

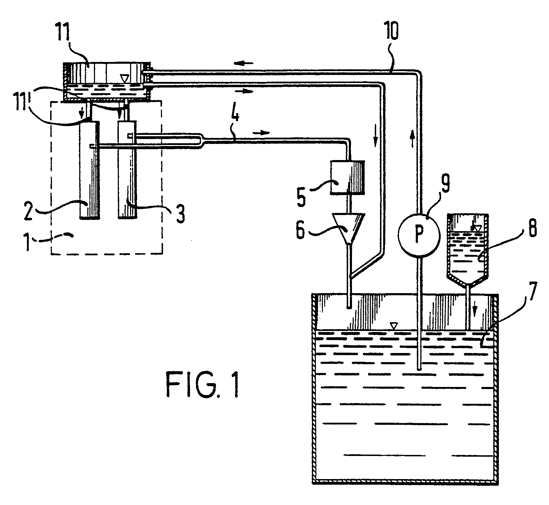

Figur 1 zeigt eine Doppelzellanordnung 1 mit einer Meßzelle 2 und einer Referenzzelle 3, deren abgehender Elektrolyt über eine gemeinsame Leitung 4 zu einem $SO_2$-Filter 5 gelangt, von dem aus nach weiterer mechanischer Filterung bei 6 der von $SO_2$ und Grobverunreinigungen befreite Elektrolyt in ein Vorratsgefäß 7 mit einer Niveauregelung fließt.

Die Konstanthaltung des Niveaus erfolgt über einen Wasserzulauf 8, wodurch Verdunstungsverluste kompensiert und die Konzentration des Elektrolyten im wesentlichen konstant gehalten wird.

Eine Pumpe 9 fördert Elektrolyten über die Leitung 10 zu einem Niveaugefäß 11, aus dem der Elektrolyt über zwei Kapillaren 11' in die Zellen 2 und 3 (bzw. deren Verbindungsleitung zu den der Gaseinleitung dienenden Zweigrohren) fließt.

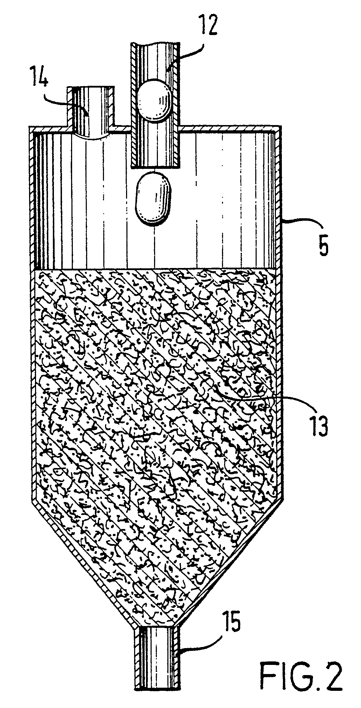

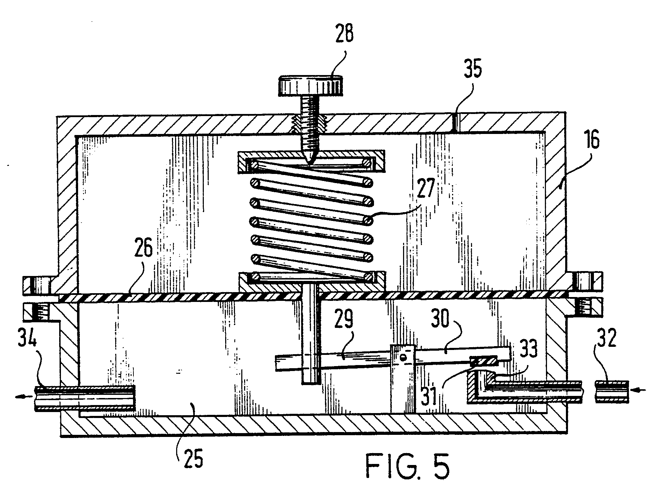

Figur 2 zeigt ein $SO_2$-Filter im Schnitt : der bei 12 von oben zutropfende Elektrolyt benetzt die Aktivkohlefüllung 13 und kommt so mit der gleichzeitig bei 14 zutretenden Luft in Kontakt. Von $SO_2$ befreiter Elektrolyt fließt bei 15 am unteren Ende ab.

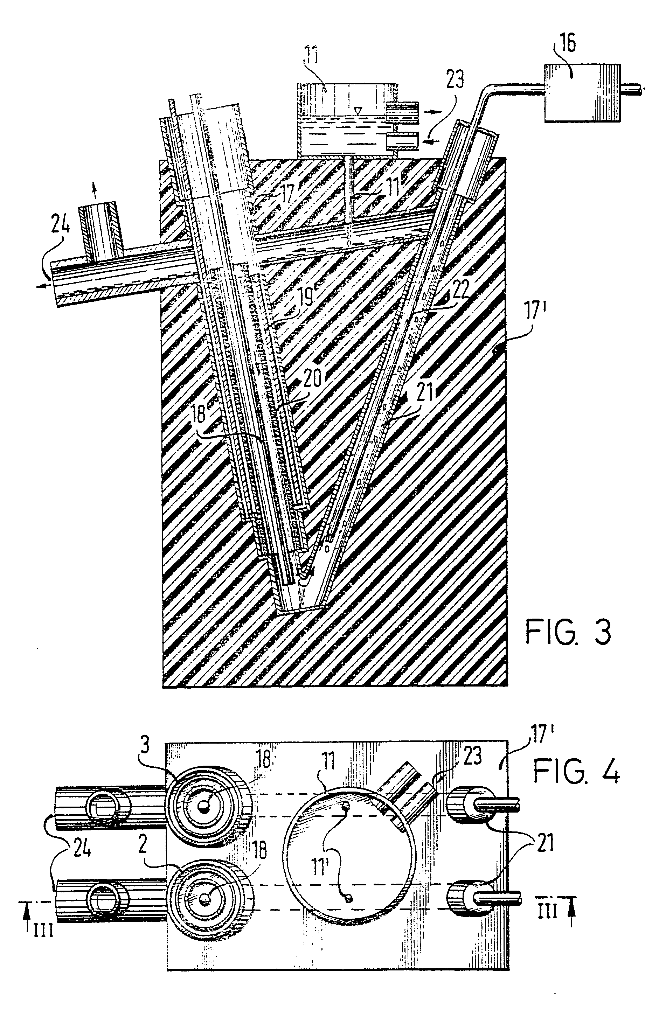

Figur 3 zeigt eine herstellungstechnisch und im Gebrauch besonders einfache Meßzelle 2, die mit einem Durchflußregler 16 in der Meßgaszuleitung betrieben wird und in einem gemeinsamen Meßzellenblock 17' vorgesehen ist. In der Elektrolysezelle 17 ist eine Meßelektrode 18 in Form eines Kohlestabes angeordnet, an dem im Elektrolyten enthaltenes $SO_2$ oxidiert wird. Als Gegenelektrode dient ein Kupferrohr 19, das durch eine Fritte 20 vom Kohlestab 18 getrennt ist. Mit der Elektrolysezelle 17 steht ein Zweiggefäß 21 in Verbindung, an dessen unterem Ende über das Rohr 22 Meßgas eingeleitet wird. Auf diese Weise entsteht in der durch Pfeile angedeuteten Weise eine kontinuierliche Elektrolytzirkulation (nach dem Mammutpumpenprinzip).

Frischer Elektrolyt tritt bei 23 zu, und bei 24 gelangen Gas und Überschußelektrolyt aus der Zelle.

Von den Elektroden führen Verbindungsleitungen zum Meß- und Registriergerät für den polarographischen Strom (nicht gezeigt).

Figur 4 zeigt (im wesentlichen in Aufsicht) einen Meßblock mit Doppelzelle vom Zelltyp gemäß Figur 3.

Bei dem im Kreislauf (von 24 nach 23) geführten Elektrolyten, der außerhalb der Zelle von SO₂ befreit wird, sollte die bei längerem Betrieb auftretende Cu-Konzentrationsveränderung korrigiert werden. Da die Konzentrationsänderung bei der Überwachung von Gasen, die nur wenig SO₂ enthalten, gering und ihr Einfluß auf den Meßwert nur schwach ist, kann man einfach bei der bevorzugten Ausführungsform des Gerätes als Zwillingszelle Meß- und Referenzzelle periodisch vertauschen, wobei in der Referenzzelle das in der Meßzelle abgeschiedene Kupfer durch Oxidation durch den im Gas enthaltenen Sauerstoff wieder in Lösung geht.

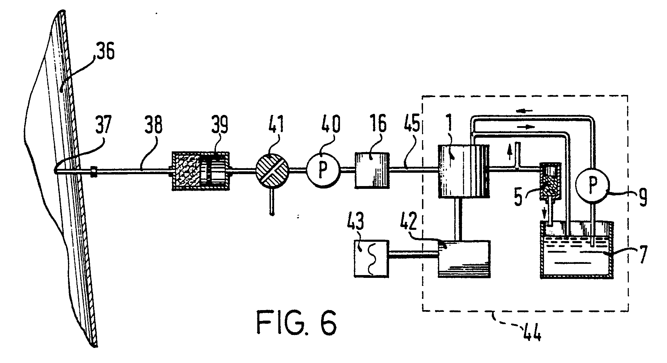

Figur 5 zeigt einen Druckregler 16 mit einer Durchflußkammer 25, deren eine Begrenzungswand durch eine Membran 26 aus einem nichtkorrosiven elastischen Material, das erhöhte Temperaturen aushält (wie Silikonkautschuk oder Teflon mit Gewebeeinlage) begrenzt wird. Auf die Membran wirkt eine Feder 27, deren Vorspannung mittels einer Schraube 28 eingestellt werden kann. Mit der Membran verbunden ist der Arm 29 eines zweiarmigen Hebels, dessen anderer Arm 30 ein Ventilelement 31 am Eingang der Gaszuleitung 32 aufweist. Dieses Ventilelement 31 wird insbesondere durch eine Silikonkautschukplatte vor der Auslaßöffnung 33 der Gaszuleitung gebildet. Bei 34 verläßt das Gas den Druckregler, der im übrigen eine Bohrung 35 in der Begrenzungswand über der Membran aufweist, die eine Ausbildung von Gasgegendrucken verhindert.

Figur 6 zeigt die Anordnung eines erfindungsgemäßen Gasanalysators an einem Kamin bzw. der Abgasleitung 36, aus der über die Gasentnahmesonde 37 Meßgas über die Leitung 38 mit Grob- und Feinstaubfilter 39 mittels einer Förderpumpe 40 entnommen wird. Bei 41 kann über einen Mehrweghahn Meßgas und Eichgas bzw. Reingas aufgegeben werden.

Das Gas gelangt über einen Druckregler 16 (wie in Figur 5) zu einer Doppelzelle 1, 2 (wie in Figur 1), in der Elektrolyt in der angedeuteten Weise im Kreislauf geführt wird, wobei der aus beiden Zellen herkommende Elektrolyt über ein SO₂-Filter 5 in einen Elektrolytvorratsbehälter 7 gelangt, von dem aus frischer Elektrolyt mit einer Elektrolytpumpe 9 zur Doppelzelle zurückgeschickt wird. Bei 42 ist die elektrische Erfassung des Differenzstroms angedeutet; 43 ist ein Schreiber, und 44 deutet ein die wesentlichen Teile des Analysators umfassendes Gehäuse an (die links vom Gehäuse angedeuteten Teile 16, 37-41 und 45 werden soweit beheizt, daß der Taupunkt des Meßgases nicht unterschritten wird).

Beispiel

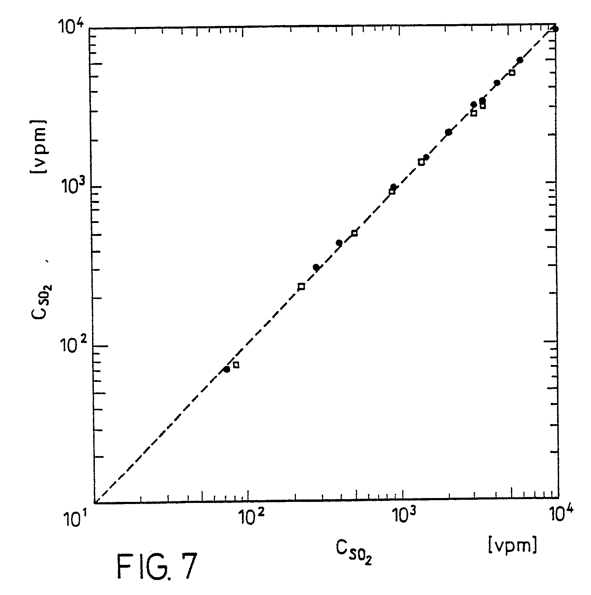

Bei einem 1fachen bzw. 2fachen Volumenaustausch pro Minute des Elektrolyten (0,5 m H₂SO₄, 0,2 m CuSO₄) im bei 20 °C befindlichen Analysator (Zelle mit Gaseinleitungszweigrohr und Verbindungswegen von ca. 10 ml), durch den ein Gemisch aus Stickstoff mit den angegebenen SO₂-Konzentrationen mit einer Geschwindigkeit von 380 ml Gas/min geleitet wurde, erhält man eine Eichkurve, wie sie aus Figur 7 ersichtlich ist. Die Signalgröße bleibt bei konstanter SO₂-Konzentration zeitlich stabil, und die für eine 90 %ige Änderung der Signalhöhe erforderliche Zeit ($\tau_{90}$) betrug rund 110 s. Mit einem Volumenaustausch unter 0,5 wird $\tau_{90}$ deutlich länger (bis 200 s und mehr). Die Signalstabilität ist dann gering und die Steilheit der Eichkurve vermindert.

**Patentansprüche**

1. Elektrochemischer Gasanalysator für den SO₂-Gehalt in Gasen, insbesondere Rauchgasen, mit einer Meßzelle mit einer die Depolarisationsströme der zu bestimmenden Gase anzeigenden Meßelektrode und einer unpolarisierbaren Gegenelektrode im gleichen Elektrolyten, der durch die Meßgaseinleitung zu einer Zirkulationsströmung, die gelöstes Gas enthaltenden Elektrolyten durch den Zwischenraum zwischen Meß- und Gegenelektrode treibt, angetrieben und im Kreislauf geführt ständig erneuert wird, wobei das im Elektrolyten gelöste SO₂ außerhalb der Zelle durch Behandlung mit Luft in Gegenwart von Aktivkohle beseitigt wird, gekennzeichnet durch ein Zufuhrsteuerungselement (11) im Kreislauf am Eingang der Zelle für eine Erneuerung des Elektrolyten in der Zelle (17 mit 21) mit einem 0,5 bis 5fachen Volumenaustausch pro Minute und eine an den Ausgang der Zelle anschließende, mit Luftzutritt (14) versehene Aktivkohlepatrone für die SO₂-Beseitigung mit einer solchen Größe und Anordnung von Elektrolytzulauf (12) und -ablauf (15), daß die Kohle von dem aus der Zelle abfließenden Elektrolyten zumindest teilweise nur von Flüssigkeit benetzt wird.

2. Gasanalysator nach Anspruch 1, dadurch gekennzeichnet daß die Aktivkohlepatrone durch eine senkrechte Patrone mit einer das obere Ende freilassenden 50-100 ml Aktivkohlefüllung (13) mit einer Körnung von zumindest 1 mm, einem unteren Auslaß (15), einer oberen Tropfzuführung (12) und Luftzutrittsöffnungen (14) am oberen Ende gebildet wird.

3. Gasanalysator nach Anspruch 1 oder 2, dadurch gekennzeichnet, daß Meß- und Gegenelektrode (18, 19) in einer allgemein senkrechten Bohrung eines Meßzellenblocks untergebracht sind, an deren unterem Ende eine Schrägbohrung für die Gaseinleitung mündet, die am oberen Ende eine Verbindungsleitung zur Vertikalbohrung aufweist, in welche Verbindungsleitung die Elektrolytzufuhrleitung (11') einmündet.

4. Gasanalysator nach einem der vorangehenden Ansprüche, dadurch gekennzeichnet, daß das Elektrolytzufuhrsteuerungselement durch ein von einer Pumpe (9) gespeistes, eine Auslaßkapillare (11') am Boden aufweisendes Niveaugefäß (11) oberhalb der Verbindungsleitung zwischen dem der Gaseinleitung dienenden Zweiggefäß (21) und der die Elektroden aufnehmenden Zelle (17) gebildet wird.

5. Gasanalysator nach einem der vorangehenden Ansprüche, gekennzeichnet durch ein Vorratsgefäß (7) im Elektrolytkreislauf mit einer Niveauregelung über eine niveaugeregelte Wasserzuleitung (8), aus dem Erneuerungselektrolyt mittels einer Pumpe (9) entnommen wird.

6. Gasanalysator nach einem der vorangehenden Ansprüche, gekennzeichnet durch eine Verdopplung der Zelle mit Zufuhr von $SO_2$-freiem Gas zur Zweitzelle, die als Referenzzelle zur Ermittlung der Differenz der Ströme beider Zellen dient, wobei Erst- und Zweitzelle (2, 3) parallel in denselben Elektrolyt-Erneuerungskreislauf eingeschaltet sind.

7. Gasanalysator nach einem der vorangehenden Ansprüche, gekennzeichnet durch einen Druckregler (16) in der Meßgaszufuhrleitung (38) mit einer Durchflußkammer (25) mit einer Begrenzungswand in Form einer federbelasteten Membran (26), die auf einen Arm (29) eines zweiarmigen Hebels wirkt, dessen anderer Arm (30) als Drosselklappe der Gaszuführung (32) ausgebildet ist.

## Claims

1. Electrochemical gas analyser for the $SO_2$ content in gases, more particularly flue gases, comprising a measuring cell having a measuring electrode indicating the depolarisation currents of the gases to be determined and an unpolarisable counter-electrode in the same electrolyte, which is driven by the introduction of gas to be tested to form a circulating flow driving electrolyte containing dissolved gas through the interspace between the measuring electrode and the counterelectrode, and which is constantly renewed while being circulated, the $SO_2$ dissolved in the electrolyte being removed outside the cell by treatment with air in the presence of activated charcoal, characterised by a supply control element (11) in the circuit at the inlet of the cell for a renewal of the electrolyte in the cell (17 with 21) with an 0.5 to 5-fold volume exchange per minute, and an activated charcoal cartridge for the removal of $SO_2$ connected to the outlet of the cell and provided with an air intake (14), the electrolyte inlet (12) and the electrolyte outlet (15) being of such size and so arranged that the charcoal is at least partially only wetted by the electrolyte flowing away from the cell.

2. Gas analyser according to claim 1, characterised in that the activated charcoal cartridge is formed of a vertical cartridge having a 50-100 ml activated charcoal charge (13) which leaves the upper end free and has a grain size of at least 1 mm., a lower outlet (15), an upper drop supply (12) and air intake apertures (14) at the upper end.

3. Gas analyser according to claim 1 or 2, characterised in that the measuring electrode and the counter-electrode (18, 19) are accommodated in a generally vertical bore in a measuring cell block to the lower end of which bore their leads an inclinded bore for the introduction of gas, which has at its upper end a connecting duct leading to the vertical bore, into which connecting duct the electrolyte supply duct (11') leads.

4. Gas analyser according to one of the preceding claims, characterised in that the electrolyte supply control element is formed of a levelling vessel (11) fed by a pump (9) and having an outlet capillary (11') at the bottom, the said vessel being situated above the connecting duct between the branch vessel (21) serving for the introduction of gas and the cell (17) in which the electrodes are accommodated.

5. Gas analyser according to one of the preceding claims, characterised by a storage vessel (7) in the electrolyte circuit, with level regulation by means of a level-regulated water supply duct (8), from which renewal electrolyte is taken by means of a pump (9).

6. Gas analyser according to one of the preceding claims, characterised by a doubling of the cell with supply of $SO_2$-free gas to the second cell, which serves as a reference cell for determining the difference of the currents of the two cells, the first and second cells (2, 3) being connected into the same electrolyte-renewal circuit.

7. Gas analyser according to one of the preceding claims, characterised by a pressure regulator (16) in the duct (38) for the supply of gas to be tested, with a through flow chamber (25) having a boundary wall in the form of a spring-loated diaphragm (26), which acts on one arm (29) of a double-armed lever, of which the other arm (30) acts as a throttle valve of the gas supply duct (32).

## Revendications

1. Analyseur électrochimique de gaz pour déterminer la teneur en $SO_2$ de gaz, notamment de fumées, comprenant une cellule de mesure ayant une électrode indiquant les courants de dépolarisation des gaz à analyser et une contre-électrode non polarisable dans le même électrolyte qui est entraîné et renouvelé constamment en circuit fermé en un courant de circulation passant par le conduit d'entrée du gaz à mesurer et refoulant l'électrolyte contenant du gaz dissous dans l'intervalle compris entre l'électrode de mesure et la contre-électrode, le $SO_2$ dissous dans l'électrolyte étant éliminé en dehors de la cellule par traitement par de l'air en présence de charbon actif, caractérisé par un élément de commande d'accès (11), monté dans le circuit à l'entrée de la cellule et destiné au renouvellement de l'électrolyte de la cellule (17 avec 21) avec un échange en volume de 0,5 à 5 fois à la minute et par une cartouche de charbon actif, destinée à éliminer le $SO_2$, se raccordant à la sortie de la cellule et munie d'une entrée d'air (14), l'arrivée (12) et l'évacuation (15) de l'électrolyte ayant des dimensions et étant disposées de façon telle qu'au moins une part du charbon n'est que mouillée par l'électrolyte s'écoulant de la cellule.

2. Analyseur de gaz suivant la revendication 1, caractérisé en ce qu'il est formé d'une cartouche verticale ayant un garnissage (13) de charbon actif de 50 à 100 ml dégageant l'extrémité supérieure et d'une granulométrie d'au moins 1 mm, une sortie (15) inférieure, une arrivée supérieure goutte à goutte (12), et des orifices d'admission d'air (14) à l'extrémité supérieure.

3. Analyseur de gaz suivant la revendication 1 ou 2, caractérisé en ce que l'électrode de mesure et la contre-électrode (18, 19) sont logées dans un perçage vertical commun d'un bloc formant cellule de mesure, à l'extrémité inférieure duquel débouche un perçage incliné pour l'introduction du gaz qui comporte, à l'extrémité supérieure, un conduit de mise en communication menant au perçage vertical, conduit de mise en communication dans lequel débouche le conduit d'amenée de l'électrolyte (11').

4. Analyseur de gaz suivant l'une des revendications précédentes, caractérisé en ce que l'élément de commande d'accès de l'électrolyte est formé d'un récipient de niveau (11), qui est alimenté par une pompe (9) qui comporte, au fond, un tube capillaire de sortie (11') et qui est disposé au-dessus du conduit de mise en communication entre le récipient d'alimentation (21) servant à l'introduction du gaz et la cellule (17) recevant les électrodes.

5. Analyseur de gaz suivant l'une des revendications précédentes, caractérisé par un réservoir (7) dans le circuit de l'électrolyte, ayant une régulation du niveau par un conduit d'amenée d'eau (8) à réglage du niveau, duquel l'électrolyte de renouvellement est prélevée au moyen d'une pompe (9).

6. Analyseur de gaz suivant l'une des revendications précédentes, caractérisé par un dédoublement de la cellule avec amenée de gaz exempt de $SO_2$ à la seconde cellule qui sert de cellule de référence pour déterminer la différence des courants électriques entre les deux cellules, la première et la seconde cellule (2, 3) étant montées en parallèle dans le même circuit de renouvellement de l'électrolyte.

7. Analyseur de gaz suivant l'une des revendications précédentes, caractérisé par un régulateur de pression (16) dans le conduit d'amenée du gaz de mesure (38), comprenant une chambre de passage (25) ayant une paroi de délimitation en forme de membrane (26), soumise à l'action d'un ressort et agissant sur un bras (29) d'un levier à deux bras, dont l'autre bras (30) est constitué en clapet d'étranglement de l'arrivée du gaz (32).

FIG. 1

FIG.2

FIG. 5

FIG. 3

FIG. 4

FIG. 6

FIG. 7